# EUROPEAN PATENT APPLICATION

(11) **EP 3 296 511 A2**
(43) Date of publication of application: **21.03.2018**
(21) Application number: 17187494.4
(22) Date of filing: 23.08.2017
(51) Int. Cl.: F01D 5/18

(54) **GAS TURBINE ENGINE BLADE, CORRESPONDING GAS TURBINE ENGINE AND METHOD FOR A GAS TURBINE ENGINE BLADE**

(30) Priority: 23.08.2016 US 201615244246
(71) Applicant: United Technologies Corporation, Farmington, CT 06032 (US)
(72) Inventor: JENNINGS, Timothy J., West Hartford, CT Connecticut 06107 (US); NIEZELSKI, David A., Manchester, CT Connecticut 06042 (US); AUXIER, James Tilsley, Bloomfield, CT Connecticut 06002 (US)
(74) Representative: Tsang, Olivia

(57) **Abstract**

A gas turbine engine (20) blade (64) includes a platform (68) that has an inner side (68A) and an outer side (68B), a root (70) that extends outwardly from the inner side (68A), and an airfoil (72) that extends outwardly from a base (72A) at the outer side (68B) to a tip end (72B). The airfoil (72) includes a leading edge and a trailing edge and a first side wall (72C) and a second side wall (72D). The first side wall (72C) and the second side wall (72D) join the leading edge and the trailing edge and at least partially define one or more cavities (74) in the airfoil (72). The airfoil (72) has a span from the base (72A) to the tip end (72B), with the base (72A) being at 0% of the span and the tip end (72B) being at 100% of the span. The first side wall (72C) includes an axial row (76) of cooling holes (78) at 90% or greater of the span.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device, such as an epicyclical gear assembly, may be utilized to drive the fan section such that the fan section may rotate at a speed different than the turbine section. In such engine architectures, a shaft driven by one of the turbine sections provides an input to the epicyclical gear assembly that drives the fan section at a reduced speed.

### SUMMARY

A gas turbine engine blade according to an example of the present disclosure includes a platform having an inner side and an outer side, a root extending outwardly from the inner side of the platform, and an airfoil extending outwardly from a base at the outer side of the platform to a tip end. The airfoil has a leading edge and a trailing edge and a first side wall and a second side wall. The first side wall and the second side wall join the leading edge and the trailing edge and at least partially define one or more cavities in the airfoil. The airfoil has a span from the base to the tip end, with the base being at 0% of the span and the tip end being at 100% of the span. The first side wall has an axial row of cooling holes at 90% or greater of the span.

In a further embodiment of any of the foregoing embodiments, the cooling holes are directed toward the tip end.

In a further embodiment of any of the foregoing embodiments, the one or more cavities includes a forward-most cavity, and the airfoil includes a plurality of purge cooling holes opening to the forward-most cavity and also being at 90% or greater of the span.

In a further embodiment of any of the foregoing embodiments, the axial row of cooling holes is aft of the purge cooling holes.

In a further embodiment of any of the foregoing embodiments, the axial row of cooling holes is located at 33% or greater with respect to a chord dimension (CD) from the leading edge to the trailing edge.

In a further embodiment of any of the foregoing embodiments, the axial row of cooling holes includes from 5 to 9 of the cooling holes.

In a further embodiment of any of the foregoing embodiments, the axial row of cooling holes includes 7 of the cooling holes.

In a further embodiment of any of the foregoing embodiments, the first side wall is a pressure side wall.

In a further embodiment of any of the foregoing embodiments, the axial row of cooling holes is located at 80% or less with respect to the chord dimension.

In a further embodiment of any of the foregoing embodiments, the cooling holes are circular.

A gas turbine engine according to an example of the present disclosure includes a compressor section, a combustor in fluid communication with the compressor section, and a turbine section in fluid communication with the combustor. The turbine section has turbine rotor having a plurality of blades. Each blade has a platform having an inner side and an outer side, a root extending outwardly from the inner side of the platform, and an airfoil extending outwardly from a base at the outer side of the platform to a tip end. The airfoil has a leading edge and a trailing edge and a first side wall and a second side wall that is spaced apart from the first side wall. The first side wall and the second side wall join the leading edge and the trailing edge and at least partially define one or more cavities in the airfoil. The airfoil has a span from the base to the tip end, with the base being at 0% of the span and the tip end being at 100% of the span. The first side wall includes an axial row of cooling holes at 90% or greater of the span.

In a further embodiment of any of the foregoing embodiments, the cooling holes are directed toward the tip end.

In a further embodiment of any of the foregoing embodiments, the one or more cavities includes a forward-most cavity. The airfoil includes a plurality of purge cooling holes opening to the forward-most cavity and also being at 90% or greater of the span, and the axial row of cooling holes is aft of the purge cooling holes.

In a further embodiment of any of the foregoing embodiments, the axial row of cooling holes is located at 33% or greater with respect to a chord dimension (CD) from the leading edge to the trailing edge.

In a further embodiment of any of the foregoing embodiments, the first side wall is a pressure side wall.

In a further embodiment of any of the foregoing embodiments, the axial row of cooling holes is located at 80% or less of the chord dimension (CD).

In a further embodiment of any of the foregoing embodiments, the airfoil extends in a chord direction between the leading edge and the trailing edge. The blades define a circumferential pitch (CP) with regard to the tip ends. The blades have a solidity (R) of CD/CP at the tip ends that is from about 1.0 to about 1.3.

In a further embodiment of any of the foregoing embodiments, the airfoil extends in a chord direction between the leading edge and the trailing edge. The blades define a circumferential pitch (CP) with regard to the tip ends. The blades have a solidity (R) of CD/CP at the tip ends that is from about 1.1 to about 1.2.

A method for a gas turbine engine blade according to an example of the present disclosure includes rotating a turbine rotor having a plurality of blades. The blades contact a blade outer air seal. Each blade has a platform having an inner side and an outer side, a root extending outwardly from the inner side of the platform, and an airfoil extending outwardly from a base at the outer side of the platform to a tip end. The airfoil has a leading edge and a trailing edge and a first side wall and a second side wall that is spaced apart from the first side wall. The first side wall and the second side wall join the leading edge and the trailing edge and at least partially define one or more cavities in the airfoil. The airfoil has a span from the base to the tip end, with the base being at 0% of the span and the tip end being at 100% of the span. The first side wall includes an axial row of cooling holes at 90% or greater of the span, and emits cooling air from the cooling holes toward the tip end to manage a temperature of the tip end with respect to wear of the tip ends of the blades.

In a further embodiment of any of the foregoing embodiments, the temperature at the tip ends controls wear between the tip ends and the blade outer air seal such that there is a blade wear regime and a seal wear regime. In the blade wear regime the blade outer air seal wears the blades more than the blades wear the blade outer air seal and in the seal wear regime the blades wear the blade outer air seal more than the air outer seal wears the blades, including emitting the cooling air to maintain a temperature in the seal wear regime.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an isolated view of a turbine blade.
Figure 3 illustrates a turbine blade and a portion of a blade outer air seal.
Figure 4 illustrates another example of a turbine blade.

### DETAILED DESCRIPTION

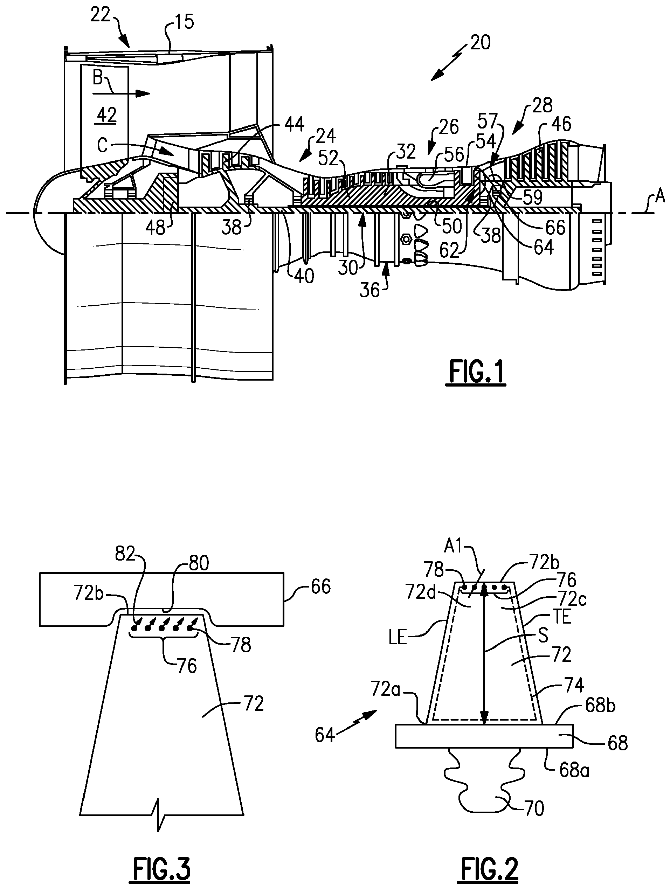

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second.

The second (or high pressure) turbine 54 includes a rotor 62 that has a plurality of turbine blades 64. In this example, the blades 64 are in a second stage in the second turbine 54, although the examples herein may also be applicable to other turbine stages. An annular blade outer air seal (BOAS) 66 is located radially outwards of the blades 64. The BOAS 66 may include a plurality of segments that are circumferentially arranged in an annulus around the central axis A of the engine 20. The BOAS 66 is in close radial proximity to the blades 64, to reduce the amount of gas flow that escapes around the blades 64.

Figure 2 illustrates an isolated view of a representative one of the blades 64. Each blade 64 has a platform 68 with an inner side 68a and an outer side 68b. A root 70 extends outwardly from the inner side 68a of the platform 68. The root 70 serves to attach the blade 64 to a hub of the rotor 62. An airfoil 72 extends outwardly from a base 72a at the outer side 68b of the platform 68 to a tip end 72b.

The airfoil 72 includes a leading edge (LE), a trailing edge (TE), a first side wall 72c, and a second side wall 72d. In this example, the first side wall 72c is a pressure side of the airfoil 72 and the second side wall is a suction side of the airfoil 72. The first side wall 72c and the second side wall 72d join the leading edge (LE) and the trailing edge (TE) and at least partially define one or more cavities 74 in the airfoil 72. The one or more cavities 74 receive cooling air, such as air from the compressor section 24, to facilitate thermal management of the blade 64.

The airfoil 72 has a span (S) from the base 72a to the tip end 72b, with the base 72a being at 0% of the span and the tip end 72b being at 100% of the span. The first side wall 72c includes an axial row 76 of cooling holes 78 at 90% or greater of the span. For example, all of the cooling holes 78 are at an equivalent span, such as at 92%, 94%, or 96%. In this example, the cooling holes 78 are circular. The cooling holes 78 may alternatively be non-circular, such as shaped or flared cooling holes, or some cooling holes 78 may be circular and others non-circular. In the illustrated example, the row 76 is a straight row but it will be appreciated that the row 76 may alternatively be a staggered row.

The cooling holes 78 are directed toward the tip end 72b of the airfoil 72. The term "directed" or variations thereof refers to the directional orientation or slope of the cooling holes 78 with respect to central axes (A1) of the cooling holes 78. For instance, the central axes A1 of the cooling holes 78 intersect the tip end 72b or at least the plane associated with the tip end 72b. Thus, air discharged from the cooling holes 78 flows toward the tip end 72b. In further examples, each central axis A1 of each cooling hole 78 forms an angle α (alpha) relative to the engine central longitudinal axis A. The angle of each of the cooling holes 78 is from 0° to 90°. Thus, each of the cooling holes 78 is oriented toward the tip end 72b rather than being oriented either upstream or inwards, which would not serve to cool the tip end 72b.

Figure 3 shows the tip end 72b of a representative one of the blades 64 and a portion of the BOAS 66. The tip ends 72b rub against the BOAS 66 and form a trench 80 that facilitates sealing around the tip ends 72b to reduce gas flow escape. The clearance between the tip ends 72b and the BOAS 66 may be a product of build clearances and/or active clearance control systems.

The BOAS 66 is typically formed of a ceramic material (e.g., a ceramic coating) and the blade 64 is typically formed of a superalloy and may have a ceramic thermal barrier coating. Both the blade 64 and the BOAS 66 may wear due to the rubbing. Due to a difference in hardness between a BOAS and a blade, rubbing can more severely wear either the blade or the BOAS. For example, the temperature at the tip end of a blade is one factor that influences the amount of wear of the blade and the BOAS. Relatively higher temperatures are associated with lower rub resistance, which may oxidize a blade or transfer material from a blade to a BOAS. Inversely, relatively lower temperatures are associated with less wear of the tip end and greater amount of trenching into a BOAS. Thus, there is a blade wear regime and a seal wear regime. In the blade wear regime the BOAS wears the blade more than the blade wears the BOAS, and in the seal wear regime the blade wears the BOAS more than the BOAS wears the blade. In the blade wear regime there may be the potential of wearing a blade and exposing one or more internal cavities, which may result in undue loss of cooling air.

In this regard, the row 76 of cooling holes 78 of the blade 64 is located at 90% or greater of the span of the airfoil 72. The cooling holes 78 are thus located proximate the tip end 72b and thus serve to emit cooling air, represented at 82, to maintain the temperature at the tip ends 72b in the seal wear regime. Cooling air discharged from a film cooling hole initially flows along the outer surface the airfoil but is eventually stripped from the surface by the core airflow. Thus, there is a limited region of the surface over which the cooling air is effective before it is stripped away. By providing the cooling holes 78 at 90% or greater of the span of the airfoil 72 - near the tip end 72b - the cooling air discharged from the cooling holes 78 can facilitate cooling of the tip end 72b before being stripped away. The cooling holes 78 can thus be used to manage the temperature of the tip end 72b with respect to wear of the tip end 72b, such as to maintain the temperature in the seal wear regime.

Additionally, the number of cooling holes 78 can be varied to increase or reduce the cooling effect at the tip end 72b. The number is not limited but typically will be from 5 to 9 cooling holes 78. Fewer cooling holes 78 may not provide a good cooling effect and additional holes 78 may be unnecessary or may provide more cooling than is desired for thermal growth tolerances or thermal stresses. In some examples, 7 cooling holes 78 provides good cooling of the tip end 72b.

The cooling holes 78 may be used to reduce the temperature at the tip end 72b by as much as about 100°F (38°C), thus potentially enhancing the durability of the blade 64, allowing tighter build tolerances, increasing passive turbine section 28 performance, and allowing higher active clearance control trim settings.

As will be appreciated, the there is also a method associated with the blades 64 and cooling holes 78. For instance, the method includes emitting cooling air, as shown at 82, from the cooling holes 78 toward the tip end 72b to manage the temperature of the tip end 72b with respect to wear of the tip end 72b of the blade 64.

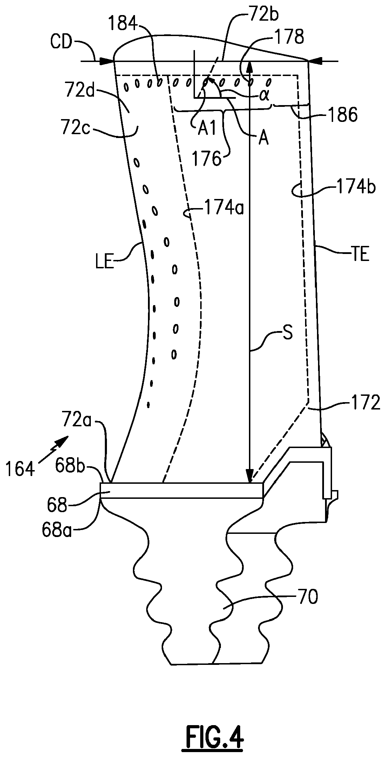

Figure 4 illustrates another example turbine blade 164. In this disclosure, like reference numerals designate like elements where appropriate and reference numerals with the addition of one-hundred or multiples thereof designate modified elements that are understood to incorporate the same features and benefits of the corresponding elements. In this example, the blade 164 includes an airfoil 172 with a forward-most cavity 174a (e.g., a purge cavity) and one or more aft cavities 174b (e.g., serpentine cavities). The airfoil 172 has a plurality of purge cooling holes 184 that open to the forward-most cavity 174a and thus serve to discharge cooling air from the forward-most cavity 174a. For example, the purge cooling holes 184 are at 90% or greater of the span of the airfoil 172.

The airfoil 172 also includes a row 176 of cooling holes 178 at 90% or greater of the span of the airfoil 172. In this example, the axial row 176 of cooling holes 178 is aft of the purge cooling holes 184. Additionally, the airfoil 172 defines a chord dimension (CD) from the leading edge to the trailing edge, and on a percentage basis of the chord dimension CD, 0% is at the leading edge and 100% is at the trailing edge. The axial row 176 of cooling holes 178 is located at 33% or greater of the chord dimension (i.e., in an axially aft two-thirds of the airfoil 172). The aft portion of the airfoil 172 at 33% or greater has a relatively smaller contact area than the forward portion of the airfoil 172 and is thus potentially less tolerant to temperature-induced wear from the BOAS 66. The placement of the cooling holes 178 at 33% or greater thus serves to facilitate thermal management. In a further embodiment, the axial row 176 of cooling holes 178 is also at 80% or less of the chord dimension (i.e., axially forward of the axially aft-most one-fifth of the airfoil 172, represented at 186) and the airfoil 172 contains no cooling holes at greater than 80%. That is, on a percentage basis of the chord dimension CD, the cooling holes 178 are located from 33% to 80% of the chord dimension. As discussed, the cooling holes 178 discharge cooling air directed toward the tip end 72b to reduce the temperature at the tip end 72b and thus promote the seal wear regime. In one modified example, for further cooling effect the airfoil 172 may have an additional row of cooling holes at greater than 80%, rather than adding cooling holes to the row 176 at less than 80% by decreasing hole spacing.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine blade comprising:
a platform having an inner side and an outer side;
a root extending outwardly from the inner side of the platform; and
an airfoil extending outwardly from a base at the outer side of the platform to a tip end, the airfoil including a leading edge and a trailing edge and a first side wall and a second side wall, the first side wall and the second side wall joining the leading edge and the trailing edge and at least partially defining one or more cavities in the airfoil,
the airfoil having a span from the base to the tip end, with the base being at 0% of the span and the tip end being at 100% of the span,
and the first side wall includes an axial row of cooling holes at 90% or greater of the span.

2. The gas turbine engine blade as recited in claim 1, wherein the cooling holes are directed toward the tip end.

3. The gas turbine engine blade as recited in claim 1 or 2, wherein the one or more cavities includes a forward-most cavity, and the airfoil includes a plurality of purge cooling holes opening to the forward-most cavity and also being at 90% or greater of the span, wherein, optionally, the axial row of cooling holes is aft of the purge cooling holes, wherein, optionally, the axial row of cooling holes is located at 33% or greater with respect to a chord dimension (CD) from the leading edge to the trailing edge.

4. The gas turbine engine blade as recited in claim 3, wherein the axial row of cooling holes includes from 5 to 9 of the cooling holes.

5. The gas turbine engine blade as recited in claim 3, wherein the axial row of cooling holes includes 7 of the cooling holes.

6. The gas turbine engine blade as recited in claim 3, wherein the first side wall is a pressure side wall, wherein, optionally, the axial row of cooling holes is located at 80% or less with respect to the chord dimension.

7. The gas turbine engine blade as recited in any preceding claim, wherein the cooling holes are circular.

8. A gas turbine engine comprising:
a compressor section;
a combustor in fluid communication with the compressor section; and
a turbine section in fluid communication with the combustor, the turbine section including turbine rotor having a plurality of blades, each blade including,
a platform having an inner side and an outer side;
a root extending outwardly from the inner side of the platform; and
an airfoil extending outwardly from a base at the outer side of the platform to a tip end, the airfoil including a leading edge and a trailing edge and a first side wall and a second side wall that is spaced apart from the first side wall, the first side wall and the second side wall joining the leading edge and the trailing edge and at least partially defining one or more cavities in the airfoil,
the airfoil having a span from the base to the tip end, with the base being at 0% of the span and the tip end being at 100% of the span,
and the first side wall includes an axial row of cooling holes at 90% or greater of the span.

9. The gas turbine engine as recited in claim 8, wherein the cooling holes are directed toward the tip end.

10. The gas turbine engine as recited in claim 8, wherein the one or more cavities includes a forward-most cavity, the airfoil includes a plurality of purge cooling holes opening to the forward-most cavity and also being at 90% or greater of the span, and the axial row of cooling holes is aft of the purge cooling holes, wherein, optionally, the axial row of cooling holes is located at 33% or greater with respect to a chord dimension (CD) from the leading edge to the trailing edge, wherein, optionally, the first side wall is a pressure side wall.

11. The gas turbine engine blade as recited in claim 10, wherein the axial row of cooling holes is located at 80% or less of the chord dimension (CD).

12. The gas turbine engine as recited in claim 10, wherein the airfoil extends in a chord direction between the leading edge and the trailing edge, the blades defining a circumferential pitch (CP) with regard to the tip ends, wherein the blades have a solidity (R) of CD/CP at the tip ends that is from about 1.0 to about 1.3.

13. The gas turbine engine as recited in claim 10, wherein the airfoil extends in a chord direction between the leading edge and the trailing edge, the blades defining a circumferential pitch (CP) with regard to the tip ends, wherein the blades have a solidity (R) of CD/CP at the tip ends that is from about 1.1 to about 1.2.

14. A method for a gas turbine engine blade, the method comprising:
rotating a turbine rotor having a plurality of blades, the blades contacting a blade outer air seal, each blade including,
a platform having an inner side and an outer side;
a root extending outwardly from the inner side of the platform; and
an airfoil extending outwardly from a base at the outer side of the platform to a tip end, the airfoil including a leading edge and a trailing edge and a first side wall and a second side wall that is spaced apart from the first side wall, the first side wall and the second side wall joining the leading edge and the trailing edge and at least partially defining one or more cavities in the airfoil,
the airfoil having a span from the base to the tip end, with the base being at 0% of the span and the tip end being at 100% of the span,
and the first side wall includes an axial row of cooling holes at 90% or greater of the span; and
emitting cooling air from the cooling holes toward the tip end to manage a temperature of the tip end with respect to wear of the tip ends of the blades.

15. The method as recited in claim 14, wherein the temperature at the tip ends controls wear between the tip ends and the blade outer air seal such that there is a blade wear regime and a seal wear regime, in the blade wear regime the blade outer air seal wears the blades more than the blades wear the blade outer air seal and in the seal wear regime the blades wear the blade outer air seal more than the air outer seal wears the blades, and including emitting the cooling air to maintain a temperature in the seal wear regime.
